(19) Europäisches Patentamt
European Patent Office
Office européen des brevets

(11) EP 2 875 731 A1

(12) **EUROPEAN PATENT APPLICATION**
published in accordance with Art. 153(4) EPC

(43) Date of publication:
**27.05.2015 Bulletin 2015/22**

(21) Application number: **13820413.6**

(22) Date of filing: **18.06.2013**

(51) Int Cl.:
*A01N 43/58* (2006.01) *A01N 37/36* (2006.01)
*A01P 3/00* (2006.01)

(86) International application number:
**PCT/JP2013/067158**

(87) International publication number:
**WO 2014/013841 (23.01.2014 Gazette 2014/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.07.2012 JP 2012161708**

(71) Applicant: **Sumitomo Chemical Company Limited**
**Tokyo 104-8260 (JP)**

(72) Inventor: **MATSUZAKI, Yuichi**
**Takarazuka-shi**
**Hyogo 665-8555 (JP)**

(74) Representative: **Vossius & Partner**
**Patentanwälte Rechtsanwälte mbB**
**Siebertstrasse 3**
**81675 München (DE)**

# (54) COMPOSITION FOR CONTROLLING PLANT DISEASE AND APPLICATION THEREFOR

(57) A plant disease control composition comprising a pyridazine compound represented by the formula (I):

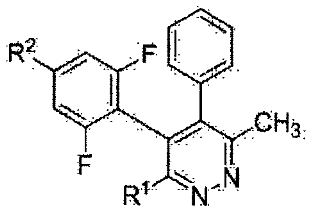
(I)

[wherein, $R^1$ represents a chlorine atom, a bromine atom, a cyano group or a methyl group, and $R^2$ represents a hydrogen atom or a fluorine atom.]
and a compound represented by the formula (A):

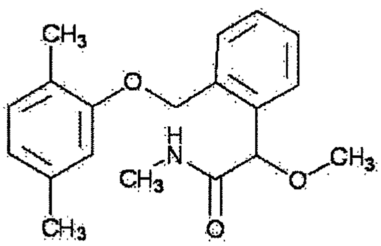
(A)

manifests an excellent control effect on plant diseases.

EP 2 875 731 A1

## Description

[Technical Field]

The present invention relates to a plant disease control composition and its use.

[Background Art]

Conventionally, a lot of compounds have been developed for controlling plant diseases, and put into practical use (see, e.g., Patent document 1, Patent document 2).

[Prior Art Document]

[Patent Document]

[Patent document 1] International Publication WO 2005/121104
[Patent document 2] International Publication WO 2006/001175

[Summary of the Invention]

[Problem to be Solved by the Invention]

The present invention has an object of providing a composition showing excellent controlling efficacy against plant diseases.

[Means for Solving the Problem]

The present inventors have investigated to find a composition showing excellent controlling efficacy against plant diseases, and resultantly found that a plant disease control composition containing a pyridazine compound represented by the following formula (I) and a compound represented by the formula (A) shows excellent controlling efficacy against plant diseases, leading to the present invention.

That is, the present invention is as described below.

[1] A plant disease control composition comprising a pyridazine compound represented by the formula (I):

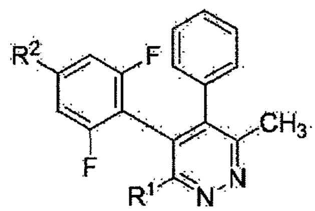

(I)

[wherein, $R^1$ represents a chlorine atom, a bromine atom, a cyano group or a methyl group, and $R^2$ represents a hydrogen atom or a fluorine atom.]

and a compound represented by the formula (A):

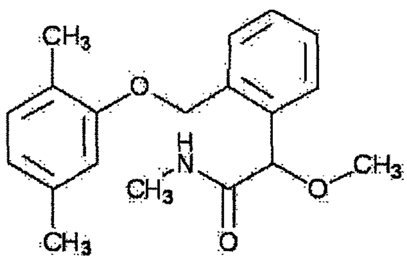

(A)

.

[2] The plant disease control composition according to [1], wherein the weight ratio of a pyridazine compound to a compound represented by the formula (A) is 0.1/1 to 10/1.
[3] A plant disease control method comprising a step of treating a plant or a soil where a plant is cultivated with an effective amount of a pyridazine compound represented by the formula (I):

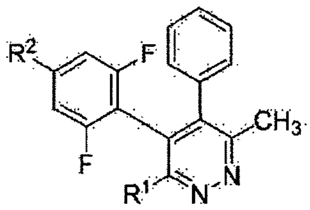

(I)

[wherein, $R^1$ represents a chlorine atom, a bromine atom, a cyano group or a methyl group, and $R^2$ represents a hydrogen atom or a fluorine atom.]
and a compound represented by the formula (A):

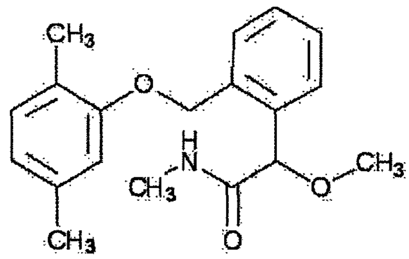

(A)

[4] The plant disease control method according to [3], wherein the weight ratio of a pyridazine compound to a compound represented by the formula (A) is 0.1/1 to 10/1.
[5] The plant disease control method according to [3] or [4], where the plant or the soil where a plant is cultivated is wheat or a soil where wheat is cultivated.

[Modes for Carrying Out the Invention]

The plant disease control composition of the present invention (hereinafter, referred to as the present inventive composition.) comprises a pyridazine compound represented by the formula (I):

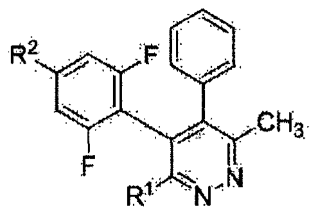

(I)

[wherein, $R^1$ represents a chlorine atom, a bromine atom, a cyano group or a methyl group, and $R^2$ represents a hydrogen atom or a fluorine atom.]
(hereinafter, referred to as the present pyridazine compound.) and a compound represented by the formula (A):

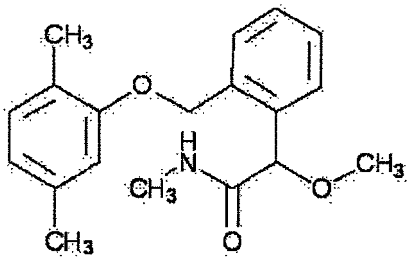

(A)

(hereinafter, referred to as the present compound (A).).

Examples of embodiments of the present pyridazine compound used in the present inventive composition include the following pyridazine compounds.

A pyridazine compound represented by the formula (I) in which $R^1$ is a chlorine atom or a methyl group.

A pyridazine compound represented by the formula (I) in which $R^1$ is a chlorine atom.

A pyridazine compound represented by the formula (I) in which $R^1$ is a methyl group.

A pyridazine compound represented by the formula (I) in which $R^1$ is a cyano group.

A pyridazine compound represented by the formula (I) in which $R^2$ is a hydrogen atom.

A pyridazine compound represented by the formula (I) in which $R^2$ is a fluorine atom.

A pyridazine compound represented by the formula (I) in which $R^1$ is a chlorine atom, a cyano group or a methyl group, and $R^2$ is a hydrogen atom.

A pyridazine compound represented by the formula (I) in which $R^1$ is a chlorine atom, a cyano group or a methyl group, and $R^2$ is a fluorine atom.

A pyridazine compound represented by the formula (I) in which $R^1$ is a chlorine atom, and $R^2$ is a hydrogen atom or a fluorine atom.

A pyridazine compound represented by the formula (I) in which $R^1$ is a bromine atom, a cyano group or a methyl group, and $R^2$ is a hydrogen atom.

A pyridazine compound represented by the formula (I) in which $R^1$ is a bromine atom, a cyano group or a methyl group, and $R^2$ is a fluorine atom.

The present pyridazine compound includes, specifically, those listed below.

A pyridazine compound represented by the formula (I) in which $R^1$ is a chlorine atom, and $R^2$ is a hydrogen atom (hereinafter, referred to as the present pyridazine compound (1).).

A pyridazine compound represented by the formula (I) in which $R^1$ is a bromine atom, and $R^2$ is a hydrogen atom (hereinafter, referred to as the present pyridazine compound (2).).

A pyridazine compound represented by the formula (I) in which $R^1$ is a cyano group, and $R^2$ is a hydrogen atom (hereinafter, referred to as the present pyridazine compound (3).).

A pyridazine compound represented by the formula (I) in which $R^1$ is a methyl group, and $R^2$ is a hydrogen atom (hereinafter, referred to as the present pyridazine compound (4).).

A pyridazine compound represented by the formula (I) in which $R^1$ is a chlorine atom, and $R^2$ is a fluorine atom (hereinafter, referred to as the present pyridazine compound (5).).

A pyridazine compound represented by the formula (I) in which $R^1$ is a bromine atom, and $R^2$ is a fluorine atom (hereinafter, referred to as the present pyridazine compound (6).).

A pyridazine compound represented by the formula (I) in which $R^1$ is a cyano group, and $R^2$ is a fluorine atom (hereinafter, referred to as the present pyridazine compound (7).).

A pyridazine compound represented by the formula (I) in which $R^1$ is a methyl group, and $R^2$ is a fluorine atom (hereinafter, referred to as the present pyridazine compound (8).).

A pyridazine compound represented by the formula (I) in which $R^1$ is a chlorine atom or a bromine atom, of the present pyridazine compounds, can be produced, for example, by a method described in International Publication WO 2005/121104.

A pyridazine compound represented by the formula (I) in which $R^1$ is a methyl group, of the present pyridazine compounds, can be produced by a method described in International Publication WO 2006/001175.

A compound (1-2) represented by the formula (I) in which $R^1$ is a cyano group, of the present pyridazine compounds, can be produced, for example, by reacting a compound (I-1) represented by the formula (I) in which $R^1$ is a bromine atom, of the present pyridazine compounds, with copper cyanide.

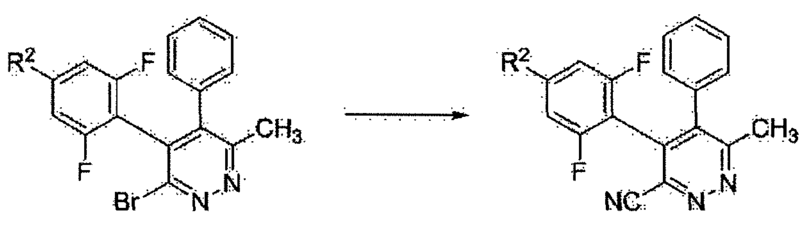

(I-1) (I-2)

[wherein, $R^2$ represents the same meaning as described above.]

The reaction is carried out usually in the presence of a solvent.

The solvent used in the reaction includes, for example, aprotic polar solvents such as N,N-dimethylacetamide

and the like.

The amount of copper cyanide used in the reaction is usually a proportion of 1 to 1.5 mol with respect to 1 mol of a compound (I-1).

The reaction temperature of the reaction is usually in the range of 120 to 180°C, and the reaction time is usually in the range of 1 to 24 hours.

After completion of the reaction, for example, the reaction mixture is mixed with water and an organic solvent, then, the mixture is filtrated, and the filtrate is liquid-separated, and the resultant organic layer is further washed with water, then, operations such as drying, concentration and the like are conducted, thus, a compound (1-2) can be isolated. The isolated compound (I-2) can also be further purified by chromatography, recrystallization and the like.

A compound (I-4) represented by the formula (I) in which $R^1$ is a methyl group, of the present pyridazine compounds, can be produced by reacting a compound (I-3) in which $R^1$ is a chlorine atom, of the present pyridazine compounds, in the presence of a Grignard reagent represented by the formula (2):

$CH_3$-MgX (2)

[wherein, X represents a bromine atom or a chlorine atom.] and an iron catalyst.

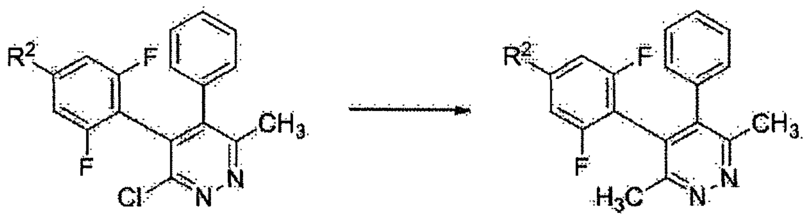

(I-3) (I-4)

[wherein, $R^2$ represents the same meaning as described above.]

The reaction is carried out usually in the presence of a solvent.

The solvent used in the reaction includes, for example, tetrahydrofuran, diethyl ether and N-methylpyrrolidone, and a mixed solvent thereof. When the reaction solvent is a mixture of tetrahydrofuran and N-methylpyrrolidone, the mixing ratio of tetrahydrofuran and N-methylpyrrolidone is usually in the range of 30:1 to 3:1 in terms of volume ratio.

The iron catalyst used in the reaction includes, for example, iron(III) acetylacetonate and iron(III) chloride. The amount of the iron catalyst to be used is usually a proportion of 0.01 to 0.3 mol with respect to 1 mol of a compound (1-3).

The reaction temperature of the reaction is usually in the range of -20°C to 30°C, and the reaction time is usually in the range of 0.1 to 6 hours.

After completion of the reaction, for example, the reaction mixture is mixed with hydrochloric acid, then, the mixture is extracted with an organic solvent, the resultant organic layer is washed with water, then, operations such as drying, concentration and the like are conducted, thus, a compound (I-4) can be isolated. The isolated compound (I-4) can also be further purified by chromatography, recrystallization and the like.

The present compound (A) is a known compound, and described, for example, in International Publication WO 02/10101. These compounds can be obtained from commercially available preparations, or can be synthesized by known methods.

In the present compound (A), one asymmetric carbon is present, and both enantiomers of an R body (represented by the following formula (A1)):

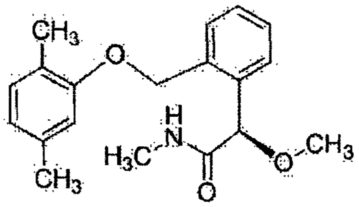

(A1)

and an S body (represented by the following formula (A2)):

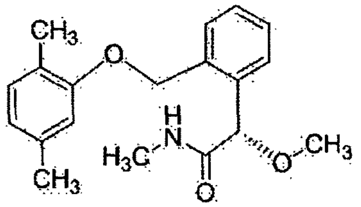

(A2)

based on the asymmetric carbon are present, and in the present invention, one having any enantiomeric ratio can be used as the present compound (A).

The enantiomer can be synthesized by a method described in International Publication WO 02/10101.

In the present inventive composition, the weight ratio of the present pyridazine compound to the present compound (A) is usually 0.01/1 to 500/1, preferably 0.1/1 to 10/1, more preferably 0.1/1 to 2/1 = the present pyridazine compound/the present compound (A).

The present inventive composition maybe a mixture itself of the present pyridazine compound and the present compound (A), however, in usual cases, the present pyridazine compound, the present compound (A) and an inert carrier are mixed, and if necessary, a surfactant and other adjuvants for preparation are added, thus, the present inventive composition is formulated into an oil solution, an emulsifiable concentrate, a flowable formulation, a wettable powder, a granular wettable powder, a dust, a granule and the like. Such a formulation can be used as it is as a plant disease controlling agent, or other inert components are added to this and the resultant composition can be used as a plant disease controlling agent.

In the present inventive composition, the present pyridazine compound and the present compound (A) are contained in a total amount of usually 0.1 to 99% by weight, preferably 0.2 to 90% by weight, more preferably 1 to 80% by weight.

Examples of the solid carrier that is used in formulating into a preparation include fine powders or grains formed of minerals such as kaolin clay, Attapulgite clay, bentonite, montmorillonite, acid clay, pyrophyllite, talc, diatomaceous earth, calcite and the like; naturally occurring organic substances such as a corncob powder, a walnut shell flour and the like; synthetic organic substances such as urea and the like; salts such as calcium carbonate, ammonium sulfate and the like; synthetic inorganic substances such as synthetic hydrated silicon oxide; and the like, and examples of the liquid carrier include aromatic hydrocarbons such as xylene, alkylbenzene, methylnaphthalene and the like; alcohols such as 2-propanol, ethylene glycol, propylene glycol, ethylene glycol monoethyl ether and the like; ketones such as acetone, cyclohexanone, isophorone and the like; vegetable oils such as soybean oil, cotton seed oil and the like; petroleum aliphatic hydrocarbons; esters; dimethyl sulfoxide, acetonitrile and water.

Examples of the surfactant include anionic surfactants such as salts of alkyl sulfate, salts of alkylarylsulfonate, salts of dialkylsulfosuccinate, salts of polyoxyethylene alkylaryl ether phosphate, salts of ligninsulfonate, salts of naphthalenesulfonate formaldehyde polycondensate and the like; nonionic surfactants such as polyoxyethylene alkylaryl ethers, polyoxyethylene alkylpolyoxypropylene block copolymers, sorbitan fatty acid esters and the like, and cationic surfactants such as alkyltrimethyl ammonium salts and the like.

Examples of other preparation adjuvants include water-soluble polymers such as polyvinyl alcohol, polyvinyl pyrrolidone and the like; polysaccharides such as gum Arabic, alginic acid and a salt thereof, CMC (carboxymethylcellulose), xanthan gum and the like; inorganic substances such as aluminum magnesium silicate, alumina sol and the like; antiseptic agents; colorants; and stabilizers such as PAP (acidic isopropyl phosphate), BHT and the like.

Further, the present inventive composition can also be prepared as follows: The present pyridazine compound and the present compound (A) are formulated individually by methods described above, and if necessary, diluted with water, and these formulations or diluted solutions thereof are mixed.

The present inventive composition can be used to protect plants from plant diseases.

The plant diseases on which the present inventive composition shows controlling efficacy include, for example, those listed below.

Diseases of rice: blast (Magnaporthe grisea), Helminthosporium leaf spot (Cochliobolus miyabeanus), sheath blight (Rhizoctonia solani) and bakanae disease (Gibberella fujikuroi).

Diseases of wheat: powdery mildew (Erysiphe graminis), Fusarium head blight (Fusarium graminearum, F. avenacerum, F. culmorum, Microdochium nivale), rust (Puccinia striiformis, P. graminis, P. recondita), pink snow mold (Micronectriella nivale), Typhula snow blight (Typhula sp.), loose smut (Ustilago tritici), bunt (Tilletia caries), eyespot (Pseudocercosporella herpotrichoides), leaf blotch (Mycosphaerella graminicola), glume blotch (Stagonospora nodorum) and tan spot (Pyrenophora tritici-repentis).

Diseases of barley: powdery mildew (Erysiphe graminis), Fusarium head blight (Fusarium graminearum, F. avenacerum, F. culmorum, Microdochium nivale), rust (Puccinia striiformis, P. graminis, P.hordei), loose smut (Ustilago nuda), scald (Rhynchosporium secalis), net blotch (Pyrenophora teres), spot blotch (Cochliobolus sativus), leaf stripe

(Pyrenophora graminea) and Rhizoctonia damping-off (Rhizoctonia solani).

Diseases of corn: smut (Ustilago maydis), brown spot (Cochliobolus heterostrophus), copper spot (Gloeocercospora sorghi), southern rust (Puccinia polysora), gray leaf spot (Cercospora zeae-maydis) and Rhizoctonia damping-off (Rhizoctonia solani).

Diseases of citrus: melanose (Diaporthe citri), scab (Elsinoe fawcetti), penicillium rot (Penicillium digitatum, P. italicum) and brown rot (Phytophthora parasitica, Phytophthora citrophthora).

Diseases of apple: blossom blight (Monilinia mali), canker (Valsa ceratosperma), powdery mildew (Podosphaera leucotricha), Alternaria leaf spot (Alternaria alternata apple pathotype), scab (Venturia inaequalis), bitter rot (Colletotrichum acutatum) and crown rot (Phytophthora cactorum).

Diseases of pear: scab (Venturia nashicola, V. pirina), black spot (Alternaria alternata Japanese pear pathotype), rust (Gymnosporangium haraeanum) and phytophthora fruit rot (Phytophthora cactorum).

Diseases of peach: brown rot (Monilinia fructicola), scab (Cladosporium carpophilum) and phomopsis rot (Phomopsis sp.).

Diseases of grape: anthracnose (Elsinoe ampelina), ripe rot (Glomerella cingulata), powdery mildew (Uncinula necator), rust (Phakopsora ampelopsidis), black rot (Guignardia bidwellii) and downy mildew (Plasmopara viticola).

Diseases of Japanese persimmon: anthracnose (Gloeosporium kaki) and leaf spot (Cercospora kaki, Mycosphaerella nawae).

Diseases of gourd: anthracnose (Colletotrichum lagenarium), powdery mildew (Sphaerotheca fuliginea), gummy stem blight (Mycosphaerella melonis), Fusarium wilt (Fusarium oxysporum), downy mildew (Pseudoperonospora cubensis), Phytophthora rot (Phytophthora sp.) and damping-off (Pythium sp.).

Diseases of tomato: early blight (Alternaria solani), leaf mold (Cladosporium fulvum) and late blight (Phytophthora infestans).

Diseases of eggplant: brown spot (Phomopsis vexans) and powdery mildew (Erysiphe cichoracearum).

Diseases of cruciferous vegetables: Alternaria leaf spot (Alternaria japonica), white spot (Cercosporella brassicae), clubroot (Plasmodiophora brassicae) and downy mildew (Peronospora parasitica).

Diseases of green welsh onion: rust (Puccinia allii) and downy mildew (Peronospora destructor).

Diseases of soybean: purple seed stain (Cercospora kikuchii), sphaceloma scud (Elsinoe glycines), pod and stem blight (Diaporthe phaseolorum var. sojae), septoria brown spot (Septoria glycines), frogeye leaf spot (Cercospora sojina), rust (Phakopsora pachyrhizi), brown stem rot (Phytophthora sojae), Rhizoctonia damping-off (Rhizoctonia solani), Corynespora target spot (Corynespora casiicola) and Sclerotinia rot (Sclerotinia sclerotiorum).

Diseases of kidney bean: anthracnose (Colletotrichum lindemthianum).

Diseases of peanut: leaf spot (Cercospora personata), brown leaf spot (Cercospora arachidicola) and southern blight (Sclerotium rolfsii).

Diseases of garden pea: powdery mildew (Erysiphe pisi).

Diseases of potato: early blight (Alternaria solani), late blight (Phytophthora infestans), pink rot (Phytophthora erythroseptica) and powdery scab (Spongospora subterranean f. sp. subterranea).

Diseases of strawberry: powdery mildew (Sphaerotheca humuli) and anthracnose (Glomerella cingulata).

Diseases of tea: net blister blight (Exobasidium reticulatum), white scab (Elsinoe leucospila), gray blight (Pestalotiopsis sp.) and anthracnose (Colletotrichum theae-sinensis).

Diseases of tobacco: brown spot (Alternaria longipes), powdery mildew (Erysiphe cichoracearum), anthracnose (Colletotrichum tabacum), downy mildew (Peronospora tabacina) and black shank (Phytophthora nicotianae).

Diseases of rapeseed: sclerotinia rot (Sclerotinia sclerotiorum) and Rhizoctonia damping-off (Rhizoctonia solani).

Diseases of cotton; Rhizoctonia damping-off (Rhizoctonia solani).

Diseases of sugar beet: Cercospora leaf spot (Cercospora beticola), leaf blight (Thanatephorus cucumeris), Root rot (Thanatephorus cucumeris) and Aphanomyces root rot (Aphanomyces cochlioides).

Diseases of rose: black spot (Diplocarpon rosae), powdery mildew (Sphaerotheca pannosa) and downy mildew (Peronospora sparsa).

Diseases of chrysanthemum and asteraceous plants: downy mildew (Bremia lactucae), leaf blight (Septoria chrysanthemi-indici) and white rust (Puccinia horiana).

Diseases of various crops: diseases caused by Pythium spp. (Pythium aphanidermatum, Pythium debarianum, Pythium graminicola, Pythium irregulare, Pythium ultimum), gray mold (Botrytis cinerea) and Sclerotinia rot (Sclerotinia sclerotiorum).

Diseases of Japanese radish: Alternaria leaf spot (Alternaria brassicicola).

Diseases of turfgrass: dollar spot (Sclerotinia homeocarpa) and brown patch and large patch (Rhizoctonia solani).

Diseases of banana: sigatoka (Mycosphaerella fijiensis, Mycosphaerella musicola).

Diseases of sunflower: downy mildew (Plasmopara halstedii).

Diseases of seeds or diseases in the initial stages of various crop plants caused by bacteria of the genus Aspergillus, the genus Penicillium, the genus Fusarium, the genus Gibberella, the genus Tricoderma, the genus Thielaviopsis, the genus Rhizopus, the genus Mucor, the genus Corticium, the genus Phoma, the genus Rhizoctonia and the genus Diplodia, and the like.
Viral diseases of various crop plants mediated by the genus Polymixa or the genus Olpidium.
The plants to which the present inventive composition can be applied include, for example, those listed below.
Crops: corn, rice, wheat, barley, rye, oat, sorghum, cotton, soybean, peanut, buckwheat, beet, rapeseed, sunflower, sugar cane, tobacco and the like;
Vegetables: solanaceous vegetables (eggplant, tomato, green pepper, hot pepper, potato, etc.), cucurbitaceous vegetables (cucumber, pumpkin, zucchini, water melon, melon, squash, etc.), cruciferous vegetables (Japanese radish, white turnip, horseradish, kohlrabi, Chinese cabbage, cabbage, leaf mustard, broccoli, cauliflower, etc.), asteraceous vegetables (burdock, crown daisy, artichoke, lettuce, etc.), liliaceous vegetables (welsh, onion, garlic and asparagus), apiaceous vegetables (carrot, parsley, celery, arsnip, etc.), chenopodiaceous vegetables (spinach, Swiss chard, etc.), lamiaceous vegetables (Perilla frutescens, mint, basil, etc.), strawberry, sweet potato, Japanese yam, colocasia, and the like;
flowers;
foliage plants;
turf grasses;
fruits: pomaceous fruits (apple, pear, Japanese pear, Chinese quince, quince, etc.), stone fleshy fruits (peach, plum, nectarine, Prunus mume, cherry fruit, apricot, prune, etc.), citrus fruits (Citrus unshiu, orange, lemon, lime, grapefruit, etc.), nuts (chestnuts, walnuts, hazelnuts, almond, pistachio, cashew nuts, macadamia nuts, etc.), berries (blueberry, cranberry, blackberry, raspberry, etc.), grape, kaki fruit, olive, loquat, banana, coffee, date palm, coconuts, and the like;
trees other than fruit trees; tea, mulberry, flowering plant, roadside trees (ash), birch, dogwood, Eucalyptus, Ginkgo biloba, lilac, maple, Quercus, poplar, Judas tree), Liquidambar formosana, plane tree, zelkova, Japanese arborvitae, fir wood, hemlock, juniper, Pinus, Picea, and Taxus cuspidate), and the like.
The above-described plant may also be a plant endowed with tolerance by a gene recombination technology.
A high controlling effect is expected for plant diseases occurring particularly in wheat, among plants listed above.
Of plant diseases occurring in these crops, wheat diseases for which particularly high efficacy is expected include powdery mildew (Erysiphe graminis), Fusarium head blight (Fusarium graminearum, F. avenacerum, F. culmorum, Microdochium nivale), rust (Puccinia striiformis, P. graminis, P. recondita), pink snow mold (Microdochium nivale), Typhula snow blight (Typhula sp.), loose smut (Ustilago tritici), bunt (Tilletia caries), eyespot (Pseudocercosporella herpotrichoides), leaf blotch (Mycosphaerella graminicola), glume blotch (Stagonospora nodorum), tan spot (Pyrenophora tritici-repentis); and the like.
Embodiments of the present inventive composition include, for example, those listed below.
A composition containing the present pyridazine compound (1) and the present compound (A).
A composition containing the present pyridazine compound (2) and the present compound (A).
A composition containing the present pyridazine compound (3) and the present compound (A).
A composition containing the present pyridazine compound (4) and the present compound (A).
A composition containing the present pyridazine compound (5) and the present compound (A).
A composition containing the present pyridazine compound (6) and the present compound (A).
A composition containing the present pyridazine compound (7) and the present compound (A).
A composition containing the present pyridazine compound (8) and the present compound (A).
A composition containing the present pyridazine compound (1) and the present compound (A) at a weight ratio of the present pyridazine compound (1)/the present compound (A) of 0.1/1 to 10/1.
A composition containing the present pyridazine compound (2) and the present compound (A) at a weight ratio of the present pyridazine compound (2)/the present compound (A) of 0.1/1 to 10/1.
A composition containing the present pyridazine compound (3) and the present compound (A) at a weight ratio of the present pyridazine compound (3)/the present compound (A) of 0.1/1 to 10/1.
A composition containing the present pyridazine compound (4) and the present compound (A) at a weight ratio of the present pyridazine compound (4)/the present compound (A) of 0.1/1 to 10/1.
A composition containing the present pyridazine compound (5) and the present compound (A) at a weight ratio of the present pyridazine compound (5)/the present compound (A) of 0.1/1 to 10/1.
A composition containing the present pyridazine compound (6) and the present compound (A) at a weight ratio of the present pyridazine compound (6)/the present compound (A) of 0.1/1 to 10/1.
A composition containing the present pyridazine compound (7) and the present compound (A) at a weight ratio of the present pyridazine compound (7)/the present compound (A) of 0.1/1 to 10/1.
A composition containing the present pyridazine compound (8) and the present compound (A) at a weight ratio of the present pyridazine compound (8)/the present compound (A) of 0.1/1 to 10/1.

The plant disease control method of the present invention (hereinafter, referred to as the present inventive control method) is carried out by treating a plant or a soil where a plant is cultivated with an effective amount of the present pyridazine compound and the present compound (A). Examples of the plant include stems and leaves of plants, seeds of plants and bulbs of plants. The bulb denotes scaly bulb, corm, rhizome, stem tuber, root tuber and rhizophore.

In the present inventive control method, the present pyridazine compound and the present compound (A) may be applied simultaneously or separately to a plant or a soil where a plant is cultivated, and in usual cases, applied in the form of the present inventive composition from the standpoint of simplicity in treatment.

In the present inventive control method, the method of treating with the present pyridazine compound and the present compound (A) includes, for example, treatment of stems and leaves, treatment of a soil, treatment of a root and treatment of seeds.

The treatment of stems and leaves includes, for example, a method of treating the surface of a plant cultivated by spraying on stems and leaves and spraying on trunk.

The treatment of a soil includes, for example, spraying on a soil, soil incorporation and irrigation of a drug solution to a soil.

The treatment of a root includes, for example, a method in which the whole plant or a root of a plant is soaked in a drug solution containing the present pyridazine compound and the present compound (A), and a method in which a solid preparation containing the present pyridazine compound, the present compound (A) and a solid carrier is attached to a root of a plant.

The treatment of seeds includes, for example, application of the present inventive composition to seeds or a root of a plant which is intended to be protected from a plant disease, and specifically, for example, a blow treatment in which a suspension of the present inventive composition is converted into mist which is blown on the surface of seeds or the surface of a bulb, a smear treatment in which a wettable powder, an emulsifiable concentrate or a flowable formulation of the present inventive composition is coated on seeds or a bulb or water is added to such a formulation before coating, a soak treatment in which seeds are soaked in a solution of the present inventive composition for predetermined time, a film coat treatment in which the present inventive composition and a polymer are mixed and the surface of seeds is coated with a film of the mixture, and a pellet coat treatment in which the present inventive composition and a powder are mixed and pellets are molded from the mixture and seeds as a nucleus.

In the present inventive control method, the amount of treatment with the present pyridazine compound and the present compound (A) varies depending on the kind of a plant to be treated, the kind and occurrence frequency of a plant disease as the control subject, a preparation form, a treatment time, a treatment method, a treatment site, weather conditions and the like, and when stems and leaves of a plant are treated or a soil where a plant is cultivated is treated, the total amount of the present pyridazine compound and the present compound (A) is usually 1 to 500 g, preferably 2 to 200 g, more preferably 10 to 100 g per $1000m^2$. Regarding the amount of treatment with the present pyridazine compound and the present compound (A) when seeds are treated, the total amount of the present pyridazine compound and the present compound (A) is usually 0.001 to 10 g, preferably 0.01 to 1 g per 1 kg of seeds.

An emulsifiable concentrate, a wettable powder, a flowable formulation and the like are usually diluted with water and sprayed for treatment. In this case, the concentration of the present pyridazine compound and the present compound (A) is usually 0.0005 to 2% by weight, preferably 0.005 to 1% by weight in terms of the total concentration of the present pyridazine compound and the present compound (A). A dust, a granule and the like are usually used for treatment without dilution.

[EXAMPLES]

The present invention will be illustrated further in detail by formulation examples and test examples below, but the present invention is not limited only to the following examples. In the following examples, parts are by weight unless otherwise stated.

First, reference production examples of the present pyridazine compound used in the present inventive composition will be explained further in detail, but the present invention is not limited to these examples.

Reference Production Example 1

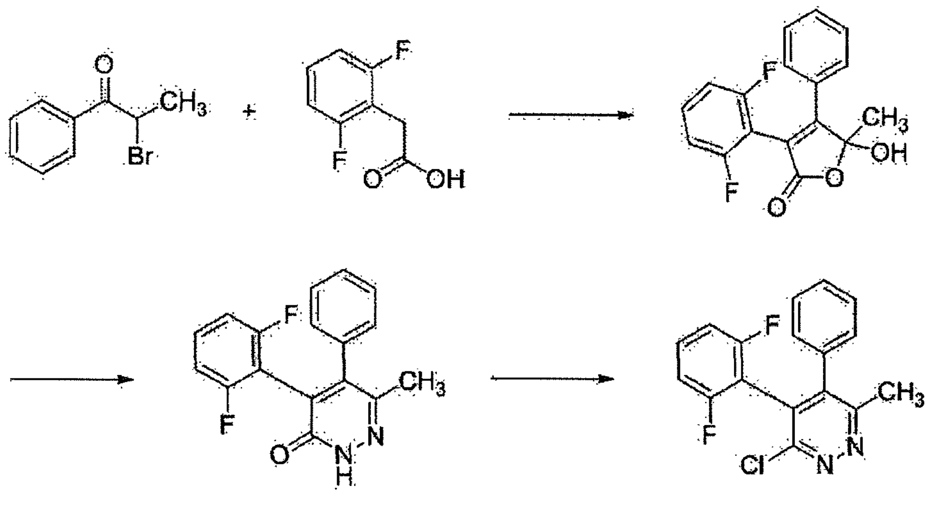

(1)

Into a mixture of 2.13 g of 2-bromopropiophenone, 1.81 g of 2,6-difluorophenylacetic acid and 25 ml of acetonitrile was dropped 1.52 g of triethylamine under a water bath, and the mixture was stirred at room temperature for 4 hours, then, allowed to stand still overnight. Into the mixture, 4.57 g of 1,8-diazabicyclo[5.4.0]-7-undecene (hereinafter, referred to as DBU) was dropped under ice cool. The mixture was stirred at room temperature for 1 hour. Thereafter, air was blown into the resultant mixture while stirring at room temperature for 5 hours. To the reaction mixture were added ice and 1 mol/L hydrochloric acid, and the mixture was extracted with ethyl acetate. The organic layer was washed with a saturated sodium bicarbonate aqueous solution and saturated saline in series, and dried over anhydrous magnesium sulfate, then, concentrated under reduced pressure, to obtain 2.83 g of 3-(2,6-difluorophenyl)-5-hydroxy-5-methyl-4-phenyl-2(5H)-fu ranone.

$^1$H-NMR ($CDCl_3$, TMS) $\delta$ (ppm): 1.78 (3H, s), 4.07 (1H, br s), 6.77-6.85 (1H, br m), 6.96-7.08 (1H, m), 7.29-7.38 (4H, m), 7.53-7.55 (2H, m)

Into a mixture of 2.83 g of 3-(2,6-difluorophenyl)-5-hydroxy-5-methyl-4-phenyl-2(5H)-fu ranone and 15 ml of 1-butanol was dropped 0.60 g of hydrazine monohydrate, then, and the mixture was stirred at a bath temperature of 110°C for 2 hours and 30 minutes. After that, the reaction mixture was cooled down to 0°C. The resultant solid was collected by filtration. The collected solid was washed using a mixed solvent (1:1) of hexane and t-butyl methyl ether, and dried under reduced pressure, to obtain 1.70 g of 4-(2,6-difluorophenyl)-6-methyl-5-phenyl-2H-pyridazin-3-one

$^1$H-NMR (DMSO-d6, TMS) $\delta$ (ppm): 2.02 (3H, s), 6.92-6.98 (2H, m), 7.11-7.12 (2H, m), 7.27-7.36 (4H, m), 13.2 (1H, br s)

One point five four grams (1.54 g) of 4-(2,6-difluorophenyl)-6-methyl-5-phenyl-2H-pyridazin-3-one and 10 ml of phosphorus oxychloride were mixed, and stirred at a bath temperature of 110°C for 1 hour and 30 minutes. The reaction mixture was left to cool to room temperature, then, concentrated under reduced pressure. To the residue were added ethyl acetate and ice water, and the mixture was liquid-separated. The organic layer was washed with a saturated sodium bicarbonate aqueous solution and saturated saline in series, dried over anhydrous sodium sulfate, then, concentrated under reduced pressure. One point five five grams (1.55 g) of the resultant residue was washed with a mixed solution (10:1) of hexane and ethyl acetate, then, with tert-butyl methyl ether, to obtain 0.85 g of the present pyridazine compound (1).

$^1$H-NMR ($CDCl_3$, TMS) $\delta$ (ppm): 2.55 (3H, s), 6.79-6.83 (2H, m), 7.07-7.09 (2H, m), 7.23-7.30 (4H, m)

Reference Production Example 2

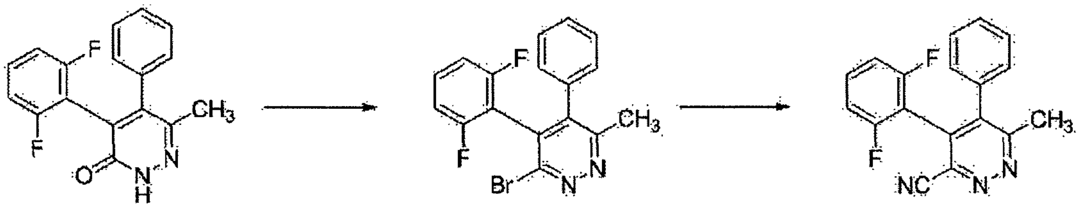

(2) (3)

Two point zero nine grams (2.09 g) of 4-(2,6-difluorophenyl)-6-methyl-5-phenyl-2H-pyridazin-3-one and 8.0 g of phosphorus oxybromide were mixed, and stirred at 90°C for 1 hour and 30 minutes. The reaction mixture was left to cool to room temperature, then, suspended in 20 ml of ethyl acetate, and the suspension was poured into about 100 g of ice. After neutralization with sodium bicarbonate, the residue was extracted with ethyl acetate, and the extracted solution was liquid-separated. The organic layer was washed with water, dried over anhydrous magnesium sulfate, then, concentrated under reduced pressure. The resultant residue (2.00g) was subjected to silica gel column chromatography, to obtain 1.12 g of the present pyridazine compound (2) as a solid.

$^1$H-NMR ($CDCl_3$, TMS) $\delta$ (ppm) : 2.52 (3H, s), 6.78-6.84 (2H, m), 7.06-7.09 (2H, m), 7.22-7.30 (4H, m)

Zero point eight zero grams (0.80 g) of the present pyridazine compound (2), 0.33 g of copper cyanide and 10 ml of N,N-dimethylacetamide were mixed, and stirred for 3 hours under reflux with heating. The reaction mixture was left to cool to room temperature, then, each 100 ml of ethyl acetate and water were added, and the mixture was filtrated through Celite (registered trademark). The filtrate was liquid-separated, the organic layer was washed with saline, and dried over anhydrous magnesium sulfate, then, concentrated under reduced pressure. The resultant residue (0.61 g) was subjected to silica gel column chromatography, to obtain 0.40 g of the present pyridazine compound (3) in the form of a white solid.

$^1$H-NMR ($CDCl_3$, TMS) $\delta$ (ppm) : 2.70 (3H, s), 6.86-6.90 (2H, m), 7.07-7.09 (2H, m), 7.30-7.38 (4H, m)

Reference Production Example 3

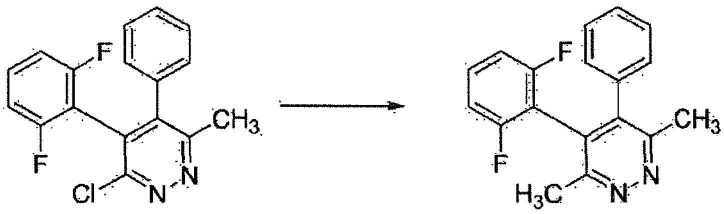

(1) (4)

Zero point nine five grams (0.95 g) of the present pyridazine compound (1), 0.21 g of iron(III) acetylacetonate, 30 ml of tetrahydrofuran and 3 ml of N-methylpyrrolidone were mixed, and 3 ml of methylmagnesium bromide (3.0 mol/L diethyl ether solution) was added to this while stirring under ice cool. The mixture was stirred for 1 hour under ice cool, then, 15 ml of a 0.33 mol/L hydrochloric acid aqueous solution was dropped into the reaction mixture, water was added, then, the mixture was extracted with ethyl acetate. The organic layer was washed with water, dried over anhydrous magnesium sulfate, then, concentrated under reduced pressure. The resultant residue (0.91 g) was subjected to silica gel column chromatography, to obtain, 0.82 g of the present pyridazine compound (4) in the form of a white crystal.

$^1$H-NMR ($CDCl_3$, TMS) $\delta$ (ppm): 2.51 (3H, s), 2.52 (3H, s), 6.74-6.82 (2H, m), 7.05-7.07 (2H, m), 7.18-7.30 (4H, m)

Reference Production Example 4

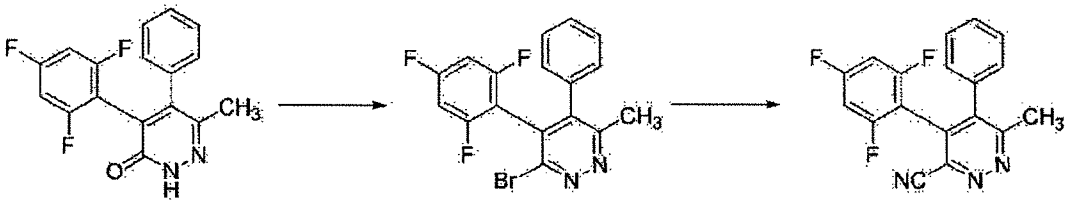

(6) (7)

Two point two one grams (2.21 g) 6-methyl-5-phenyl-4-(2,4,6-trifluorophenyl)-2H-pyridazin-3-one and 8.0 g of phosphorus oxybromide were mixed, and stirred at 90°C for 1 hour and 30 minutes. The reaction mixture was left to cool to room temperature, then, suspended in 20 ml of ethyl acetate, and the suspension was poured into 100 g of ice. After neutralization with sodium bicarbonate, the residue was extracted with ethyl acetate, and the extracted solution was liquid-separated. The organic layer was washed with saline, dried over anhydrous magnesium sulfate, then, concentrated under reduced pressure. The resultant residue (2.42 g) was subjected to silica gel column chromatography, to obtain 1.86 g of the present pyridazine compound (6) in the form of a white solid.

$^1$H-NMR ($CDCl_3$, TMS) $\delta$ (ppm) : 2.52 (3H, s), 6.56-6.64 (2H, m), 7.05-7.07 (2H, m), 7.30-7.36 (3H, m)

One point two six grams (1.26 g) of the present pyridazine compound (6), 0.44 g of copper cyanide and 14 ml of N, N-dimethylacetamide were mixed, and stirred for 3 hours under reflux with heating. The reaction mixture was left to cool to room temperature, then, each 100 ml of ethyl acetate and water were added, and the mixture was filtrated through Celite (registered trademark).

The filtrate was liquid-separated, the organic layer was washed with saline, dried over anhydrous magnesium sulfate, then, concentrated under reduced pressure. The resultant residue (1.07 g) was subjected to silica gel column chromatography, to obtain 0.55 g of the present pyridazine compound (7) in the form of a pale yellow solid.

$^1$H-NMR ($CDCl_3$, TMS) $\delta$ (ppm): 2.70 (3H, s), 6.63-6.69 (2H, m), 7.06-7.09 (2H, m), 7.34-7.40 (3H, m)

Reference Production Example 5

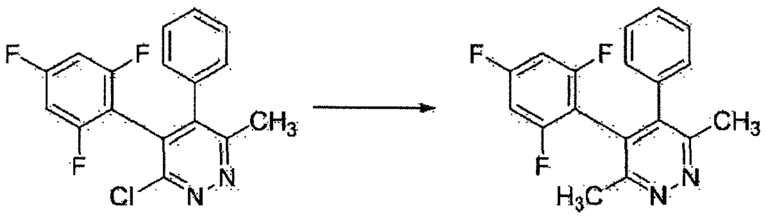

(5) (8)

One point zero zero gram (1.00 g) of the present pyridazine compound (5) produced according to a method described in International Publication WO 2005/121104, 0.21 g of iron(III) acetylacetonate, 30 ml of tetrahydrofuran and 3 ml of N-methylpyrrolidone were mixed, and 3 ml of methylmagnesium bromide (3.0 mol/L diethyl ether solution) was added to this while stirring under ice cool. The mixture was stirred for 1 hour under ice cool, then, 15 ml of a 0.33 mol/L hydrochloric acid aqueous solution was dropped into the reaction mixture, water was added, then, the mixture was extracted with ethyl acetate. The organic layer was washed with water, dried over anhydrous magnesium sulfate, then, concentrated under reduced pressure. The resultant residue (0.98 g) was subjected to silica gel column chromatography, to obtain 0.82 g of the present pyridazine compound (8) in the form of a white crystal.

The $^1$H-NMR data corresponded approximately to those described in WO 2006/001175A1.

Formulation Example 1

Two point five (2.5) parts of any of the present pyridazine compounds (1) to (8), 1.25 parts of the present compound (A), 14 parts of polyoxyethylene styrylphenyl ether, 6 parts of calcium dodecylbenzenesulfonate and 76.25 parts of xylene were mixed well, to obtain each formulation.

Formulation Example 2

Two (2) parts of any of the present pyridazine compounds (1) to (8), 8 parts of the present compound (A), 35 parts of a mixture (weight proportion 1:1) of white carbon and a polyoxyethylene alkyl ether sulfate ammonium salt, and 55 parts of water were mixed, and finely pulverized by a wet pulverization method, to obtain each formulation.

Formulation Example 3

Five (5) parts of any of the present pyridazine compounds (1) to (8), 10 parts of the present compound (A) and 28.5 parts of an aqueous solution containing 1.5 parts of sorbitan trioleate and 2 parts of polyvinyl alcohol were mixed, and finely pulverized by a wet pulverization method, then, 45 parts of an aqueous solution containing 0.05 parts of xanthan gum and 0.1 part of aluminum magnesium silicate was added into this, further, 10 parts of propylene glycol was added and these were mixed with stirring, to obtain each formulation.

Formulation Example 4

One (1) part of any of the present pyridazine compounds (1) to (8), 4 parts of the present compound (A), 1 part of synthetic hydrated silicon oxide, 2 parts of calcium ligninsulfonate, 30 parts of bentonite and 62 parts of kaolin clay were pulverized and mixed well, water was added and the mixture was kneaded well, then, granulated and dried, to obtain each formulation.

Formulation Example 5

Twelve point five (12.5) parts of any of the present pyridazine compounds (1) to (8), 37.5 parts of the present compound (A), 3 parts of calcium ligninsulfonate, 2 parts of sodium laurylsulfate and 45 parts of synthetic hydrated silicon oxide were pulverized and mixed well, to obtain each formulation.

Formulation Example 6

Three (3) parts of any of the present pyridazine compounds (1) to (8), 2 parts of the present compound (A), 85 parts of kaolin clay and 10 parts of talc were pulverized and mixed well, to obtain a formulation.

Next, test examples are shown. The compound represented by the formula (A) used in the test example was a racemic mixture.

Test Example 1

A plastic pot was packed with a soil, wheat (variety: Apogee) was disseminated, and allowed to grow in a greenhouse for 14 days. The test compound was dissolved in CEC cocktail (cyclohexanone: Sorpol (registered trademark) 2680X (manufactured by TOHO Chemical Industry Co., Ltd.) = 5:1 (volume ratio)) to give a formulation, then, the formulation was diluted with water to obtain prescribed concentration, and the diluted solution was sprayed on stems and leaves so as to attain sufficient adhesion to the leaf surface of the above-described wheat. After spraying, the plant was air-dried, and two days later, an aqueous suspension (about 1000000/ml) of conidiospores of the germ of wheat leaf blotch (Mycosphaerella graminicola) was sprayed and inoculated. After inoculation, first, the plant was left under humid condition at 18°C for 3 days, and taken out from the humid condition and cultivated in a temperature-controlled room at 18°C for 14 days (this is called treated district). Thereafter, the wheat leaf blotch lesion area was investigated.

In contrast, wheat was cultivated in the same manner as for the treated district excepting that a diluted solution of the test compound was not sprayed on stems and leaves (this is called non-treated district). The wheat leaf blotch lesion area was investigated in the same manner as for the treated district.

Efficacy of the treated district was determined from the lesion areas of the treated district and the non-treated district according to the following formula (1). The results are shown in Table [1] and Table [2].

$$\text{Efficacy (\%)} = (1 - \text{lesion area of treated district}/\text{lesion area of non-treated district}) \times 100$$

: formula (1)

[Table 1]

| Present pyridazine compound (1) [ppm] | Present compound (A) [ppm] | Efficacy (%) |
|---|---|---|
| 3.1 | 13 | 100 |

[Table 2]

| Present pyridazine compound (5) [ppm] | Present compound (A) [ppm] | Efficacy (%) |
|---|---|---|
| 3.1 | 13 | 100 |

Test Example 2

In a rotary seed treatment machine (seed dresser, manufactured by Hans-Ulrich Hege GmbH), 10 g of seeds of wheat (variety; Shirogane) infected naturally with spores of the germ of pink snow mold (Microdochium nivale) were smeared with 100 μl of a cyclohexanone solution containing a prescribed weight of the test compound.

One day after the above-described treatment, a plastic pot was packed with a soil, and seeds treated with the test compound were disseminated and cultivated for 20 days in a glass greenhouse (this was used as the treated district). Thereafter, the onset or no-onset of pink snow mold in seedlings germinated from seeds was observed, and the incidence rate was determined according to the following formula (2).

In contrast, wheat seeds not having undergone the above-described smearing treatment were cultivated in the same manner as for the treated district (this was used as the non-treated district). The incidence rate was determined in the same manner as for the treated district.

Efficacy of the treated district was determined from the incidence rates in the treated district and the non-treated district according to the following formula (3).

The results are shown in Table [3] and Table [4].

Incidence rate (%) = (Number of onset germinated seedlings/Number of total germinated seedlings)×100 : formula (2)

Efficacy (%) = (1 − incidence rate in treated district/incidence rate in non-treated district)×100 : formula (3)

[Table 3]

| Present pyridazine compound (1) [g/100 kg of seeds] | Present compound (A) [g/100 kg of seeds] | Efficacy (%) |
|---|---|---|
| 5 | 5 | 100 |

[Table 4]

| Present pyridazine compound (5) [g/100 kg of seeds] | Present compound (A) [g/100 kg of seeds] | Efficacy (%) |
|---|---|---|
| 5 | 5 | 100 |

[Industrial Applicability]

According to the present invention, plant diseases can be controlled.

## Claims

**1.** A plant disease control composition comprising a pyridazine compound represented by the formula (I):

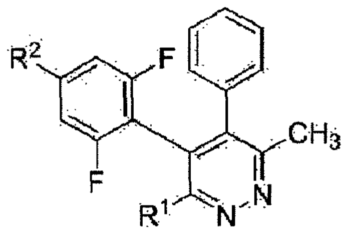

(I)

[wherein, $R^1$ represents a chlorine atom, a bromine atom, a cyano group or a methyl group, and $R^2$ represents a hydrogen atom or a fluorine atom.]
and a compound represented by the following formula (A):

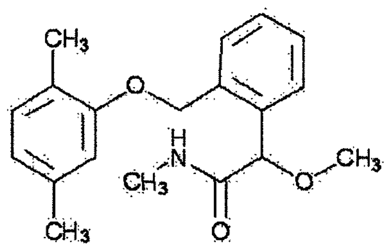

(A)

.

**2.** The plant disease control composition according to Claim 1, wherein the weight ratio of the pyridazine compound to the compound represented by the formula (A) is 0.1/1 to 10/1.

**3.** A plant disease control method comprising a step of treating a plant or a soil where a plant is cultivated with an effective amount of a pyridazine compound represented by the formula (I):

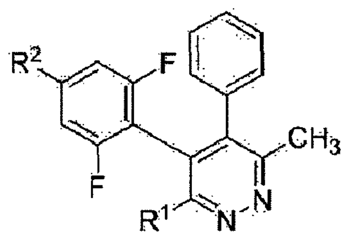

(I)

[wherein, $R^1$ represents a chlorine atom, a bromine atom, a cyano group or a methyl group, and $R^2$ represents a hydrogen atom or a fluorine atom.]
and a compound represented by the following formula (A):

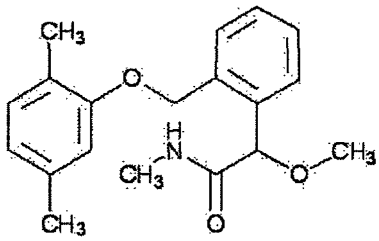

(A)

.

4. The plant disease control method according to Claim 3, wherein the weight ratio of the pyridazine compound to the compound represented by the formula (A) is 0.1/1 to 10/1.

5. The plant disease control method according to Claim 3 or 4, wherein the plant or the soil where a plant is cultivated is wheat or a soil where wheat is cultivated.

## INTERNATIONAL SEARCH REPORT

International application No.
PCT/JP2013/067158

A. CLASSIFICATION OF SUBJECT MATTER
*A01N43/58*(2006.01)i, *A01N37/36*(2006.01)i, *A01P3/00*(2006.01)i

According to International Patent Classification (IPC) or to both national classification and IPC

B. FIELDS SEARCHED

Minimum documentation searched (classification system followed by classification symbols)
A01N43/58, A01N37/36, A01P3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | WO 2012/020774 A1 (Sumitomo Chemical Co., Ltd.), 16 February 2012 (16.02.2012), claims; paragraph [0025] & EP 2604116 A1 & US 2013/137683 A1 & JP 2012-056941 A & CN 103068238 A | 1-5 |
| Y | Journal of Pesticide Science, 2002, Vol.27, No.2, p.118-126 | 1-5 |
| Y | JP 2011-201850 A (Sumitomo Chemical Co., Ltd.), 13 October 2011 (13.10.2011), claims; paragraph [0006]; examples & WO 2011/108763 A2 & US 2013/045969 A1 & EP 2542073 A2 & CN 102834005 A | 1-5 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>01 August, 2013 (01.08.13) | Date of mailing of the international search report<br>13 August, 2013 (13.08.13) |
| Name and mailing address of the ISA/<br>Japanese Patent Office<br>Facsimile No. | Authorized officer<br><br>Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005121104 A
- WO 2006001175 A
- WO 0210101 A
- WO 2006001175 A1